# EUROPÄISCHE PATENTSCHRIFT

(11) **EP 1 248 914 B1**
(45) Veröffentlichungstag und Bekanntmachung des Hinweises auf die Patenterteilung: **06.07.2005**
(21) Anmeldenummer: 01997649.7
(22) Anmeldetag: 22.11.2001
(51) Int. Cl.: F16C 11/02, G05G 1/14

(54) **BEFESTIGUNGSVORRICHTUNG FÜR PEDALE IN KRAFTFAHRZEUGEN**
MOUNTING DEVICE FOR PEDALS IN MOTOR VEHICLES
DISPOSITIF DE FIXATION POUR DES PEDALES DANS DES VEHICULES AUTOMOBILES

(30) Priorität: 24.11.2000 DE 10058561
(43) Veröffentlichungstag der Anmeldung: 16.10.2002
(73) Patentinhaber: ZF Lemförder Metallwaren AG, 49441 Lemförde (DE)
(72) Erfinder: BURGSTALER, Andree, 32351 Dielingen (DE); DÜTZ, Jan, 49401 Damme (DE); PAPKE, Simone, 49076 Osnabrück (DE)
(86) Internationale Anmeldenummer: PCT/DE2001/004360
(87) Internationale Veröffentlichungsnummer: WO 2002/042651

(56) Entgegenhaltungen:
- EP-A- 0 625 453
- DE-A- 4 040 151
- US-A- 2 292 128
- US-A- 3 091 795
- US-A- 4 648 738
- US-A- 5 069 586
- US-A- 5 871 286

## Beschreibung

Die Erfindung betrifft eine Befestigungsvorrichtung mit Pedal für Kraftfahrzeuge, mit einem Haltebolzen, welcher an seinen freien Enden in je einer Lagerstelle eines Pedalbocks aufgenommen ist und zwischen diesen Lagerstellen eine Lagerstelle für das Pedal aufweist, wobei diese Lagerstelle in einer Bohrung des Pedalkörpers angeordnet ist.

Befestigungsvorrichtungen der geschilderten gattungsgemäßen Art werden bekanntlich in unterschiedlicher Ausgestaltung sowohl in Personenkraftfahrzeugen als auch Lastkraftfahrzeugen eingesetzt. Die verwendeten Haltebolzen zur Lagerung der Pedale bestehen hierbei in der Regel aus Metall und sind in ihrer Ausgestaltung und Lage bezüglich des die Pedale und den Bolzen aufnehmenden Lagerbocks unterschiedlich ausgeführt.

Beispielsweise können die verwendeten Metallbolzen einseitig im Pedalbock verpresst sein und auf der gegenüber liegenden im Pedalbock aufgenommenen Lagerseite mit einer Rändelung versehen werden. Durch die Verpressung und Rändelung des Metallbolzens wird gewährleistet, dass dieser bei allen Betriebsgegebenheiten und insbesondere auch im Falle eines Unfalls seine Lageposition nicht ändert. Darüber hinaus sind aus dem Stand der Technik Metallbolzen bekannt, die statt einer Rändelung mit einem Sicherungselement - wie beispielsweise einem Sprengring - versehen werden und bei denen auf diese Weise eine Lagefixierung herbeigeführt wird. Ferner sind als Haltebolzen Ausführungen als Gewindebolzen mit einseitigem Anschlag bekannt, die mit Hilfe einer Mutter fixiert werden.

Allen beschriebenen Ausführungsbeispielen von Haltebolzen ist gemeinsam, dass sie so gestaltet sind, dass sie im Falle eines Unfalls in ihrer Lage verbleiben, wobei das mittels des Haltebolzens gelagerte Pedal durch Drehung um diesen Haltebolzen u. U. aus dem Fußbereich des Fahrzeuglenkers entfernt wird.

Darüber hinaus sind unter der Bezeichnung Pedal-Release-Systeme bekannte Befestigungssysteme im Stand der Technik vorhanden, bei denen die Wandungen des Pedalbocks im Falle eines Unfalls in ihrem ursprünglichen Abstand zueinander vergrößert werden, so dass der beidseitig in den Wandungen gelagerte Haltebolzen und das daran befestigte Pedal freigegeben werden, um eine Unfallgefahr im Fußbereich des Fahrers herabzusetzen. Bei derartigen Befestigungssystemen sind die angesprochenen Rändelungen oder Sicherungselemente selbstverständlich so auszulegen, dass sie im Falle eines Unfalls den dann auftretenden Kräften zur Aufweitung des Pedalbocks keinen wesentlichen Widerstand entgegensetzen. Nachteil aller bestehenden Systeme ist es, dass für die Montage der Pedale am Pedalbock mehrere Fertigungsschritte zur Fixierung des Haltebolzens notwendig sind.

Technische Problemstellung der vorliegenden Erfindung ist es, hier Abhilfe zu schaffen und eine Befestigungsvorrichtung der eingangs geschilderten gattungsgemäßen Art bereitzustellen, welche eine kostengünstige Herstellung der Einzelteile der Befestigung erlaubt, und darüber hinaus eine einfache und zeitsparende Montage eines Pedals am zugehörigen Pedalbock gewährleistet.

Diese technische Problemstellung wird in Zusammenschau mit den gattungsbildenden Merkmalen des Anspruches 1 durch die im kennzeichnenden Teil dieses Anspruches offenbarte technische Lehre gelöst.

Die Erfindung sieht vor, dass der Haltebolzen aus zwei Bolzenhälften besteht, die in zusammengesetzten Zustand durch eine elastische Schnapphalterung miteinander verriegelt sind, wobei die Bolzenhälften in Bezug auf ihre Lage zum Pedal durch einen Anschlag am Pedalkörper festgelegt sind. Diese erfindungsgemäße Ausgestaltung erlaubt ein einfaches Zusammenfügen der gesamten Befestigungsvorrichtung dergestalt, dass die Bolzenhälften seitlich von außen in die jeweiligen Lagerstellen des Pedalbocks eingeschoben werden, wobei sie gleichzeitig in die Bohrung des mittig zwischen den Lagerstellen des Pedalbocks angeordneten Pedals eingreifen. Das Einführen der Bolzenhälften geschieht so weit, dass die an den zueinander weisenden Enden der Bolzenhälften angeordnete Schnapphalterung verriegelt, wobei gleichzeitig die Lagefixierung des Gesamtbolzens durch mindestens einen Anschlag- vorzugsweise im Inneren der Bohrung des Pedalkörpers - herbeigeführt wird. Somit ist eine Lagefixierung des Haltebolzens gewährleistet.

Besondere Ausgestaltungen des Gegenstandes der Erfindung ergeben sich zusätzlich aus den Merkmalen der Unteransprüche.

Es hat sich als besonders zweckmäßig erwiesen, die Bolzenhälften des Haltebolzens als Kunststoff- Hohlzylinder herzustellen, wobei die Schnapphalterung aus mindestens zwei in Axiallängsrichtung der Bolzenhälften verrastenden Zahnvorsprüngen besteht, dergestalt, dass ein Zahnvorsprung an der Innenseite einer Hohlzylinderbolzenhälfte und der andere Zahnvorsprung an der Außenwandung der korrespondierenden zweiten Hohlzylinderbolzenhälfte angeordnet ist. Zur Erhöhung der Verrastungskräfte können darüber hinaus mehrere Zahnvorsprünge an den Enden der Bolzenhälften regelmäßig beabstandet zueinander angeordnet werden. Werden darüber hinaus über den Umfang verteilt Zahnvorsprünge an der Innenseite einer Hohlzylinderbolzenhälfte und Zahnvorsprünge an der Außenseite der selben Hohlzylinderbolzenhälfte angeordnet, lassen sich auf diese Weise die verwendeten beiden Bolzenhälften als Gleichteile fertigen, was die Herstellungskosten infolge der Anfertigung nur einer Pressform wesentlich herabsetzt.

Darüber hinaus sieht eine vorteilhafte Gestaltung der Befestigungsvorrichtung vor, den Anschlag für die Festlegung des Haltebolzens durch eine in der Bohrung des Pedalkörpers angeordneten Vorsprung und eine in der Außenseite des aus den Bolzenhälften zusammengesetzten Haltebolzens angeordnete korrespondierende Ausnehmung zu gestalten. Der Vorsprung kann hierbei aus einer einzelnen Nase bestehen oder umlaufend gestaltet sein ebenso wie die Ausnehmung im Haltebolzen als Tasche ausgeführt oder als in der Außenseite des Bolzens angeordnete umlaufende Nut gestaltet sein kann.

Das Zusammensetzen der Bolzenhälften kann dadurch erleichtert werden, dass der an der Außenseite einer Bolzenhälfte angeordnete Zahnvorsprung an seinem vorderen freien Ende mit einer Anfasung versehen wird. Diese Anfasung erleichtert das Einführen der Zahnvorsprünge in die Hohlbohrung der korrespondierenden anderen Bolzenhälfte.

Im Folgenden wird ein Ausführungsbeispiel des Gegenstandes der Erfindung anhand der beigefügten Zeichnungen näher erläutert. Es zeigen:
- Figur 1: eine Gesamtansicht der Befestigungsvorrichtung für ein Pedal eines Kraftfahrzeuges in Schnittdarstellung,
- Figur 2: eine Schnittdarstellung durch die beiden Bolzenhälften eines erfindungsgemäßen Haltebolzens und
- Figuren 3 und 4: zwei unterschiedliche Ausführungen eines Haltebolzens, teilweise im Schnitt beziehungsweise in räumlicher Anordnung

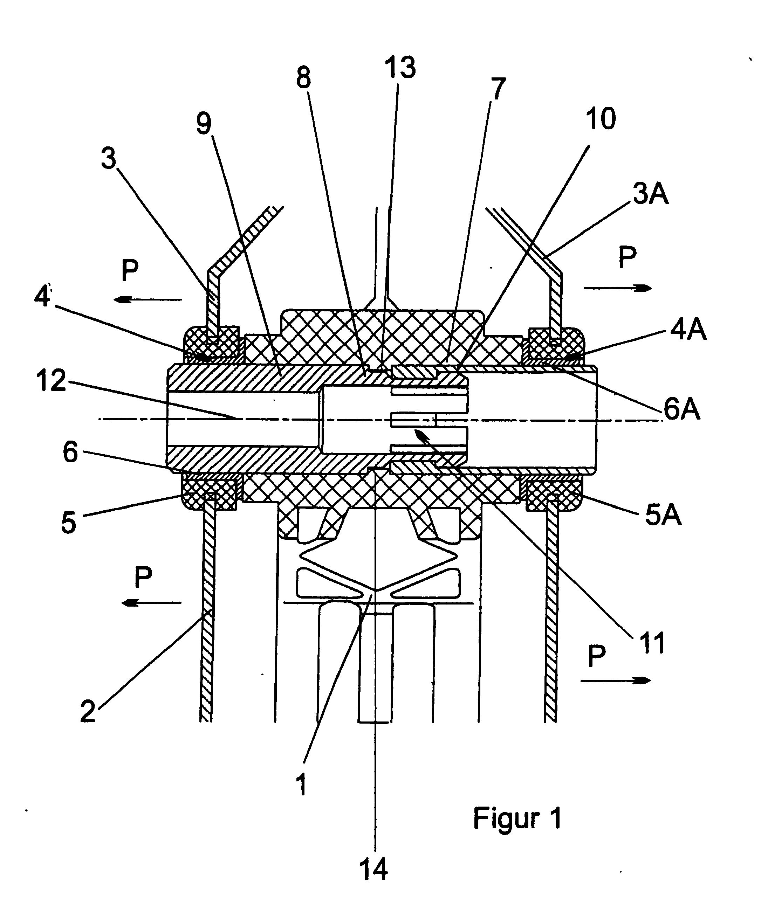

Die in der Figur 1 dargestellte Befestigungsvorrichtung zur Lagerung eines Pedalkörpers 1 besteht im Wesentlichen aus einem Pedalbock 2 und einem innerhalb des Pedalbockes 2 gelagerten Haltebolzen 8. Der Pedalbock 2 besteht im dargestellten Ausführungsbeispiel aus einem Formblechteil mit zwei Seitenwangen 3, 3A. In den Seitenwangen 3, 3A sind jeweils eine Bohrung 4 und 4A ausgespart, in die jeweils eine Lagerstelle 5 und 5A als Kunststoffteil eingespritzt worden ist. Zur Lagerung des Haltebolzens 8 besitzen die Lagerstellen 5 und 5A jeweils eine eingesetzte Gleitlagerbuchse 6 bzw. 6A.

Wie aus der Figur 1 ersichtlich wird, ist der Haltebolzen 8 mit seinen jeweiligen freien Enden in je einer Gleitlagerbuchse 6 bzw. 6A aufgenommen, wobei sich zwischen den Lagerstellen und den Seitenwangen 3, 3A des Pedalblockes 2 der Pedalkörper 1 mit einer Durchgangsbohrung 7 befindet, welche vom Haltebolzen 8 durchgriffen wird.

Der Haltebolzen 8 besteht wiederum aus zwei Bolzenhälften 9 bzw. 10, welche mit einer an den zueinander weisenden freien Enden der Bolzenhälften 9 und 10 angeordneten Schnapphalterung 11 miteinander verrastet sind.

Aus der Figur 1 wird darüber hinaus deutlich, dass der aus den Bolzenhälften 9, 10 bestehende Haltebolzen 8 in seiner Lage in Richtung der Haltebolzenlängsachse 12 durch einen innerhalb der Bohrung 7 des Pedalkörpers 1 angeordneten Anschlag 13 festgelegt ist. Der Anschlag 13 ist in diesem Ausführungsbeispiel als umlaufender, in den Innenraum der Bohrung 7 hineinragender Vorsprung gestaltet. Korrespondierend dazu befindet sich im Haltebolzen 8 eine umlaufende, als Nut gestaltete Ausnehmung 14.

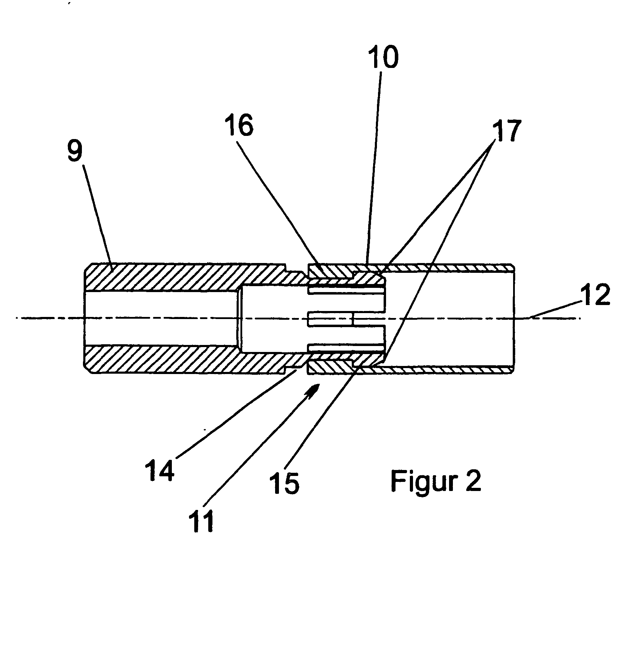

Die Figur 2 macht deutlich, dass die Bolzenhälften 9, 10 als Hohlzylinder ausgeführt sind. Die Schnapphalterung 11 zur Verrastung der Bolzenhälften 9, 10 besteht im Wesentlichen aus miteinander verrastenden Zahnvorsprüngen 15 an der Bolzenhälfte 9 und Zahnvorsprüngen 16 an der Bolzenhälfte 10. Der Zahnvorsprung 15 befindet sich hierbei vorstehend an der Außenseite des Bolzens 9, wohingegen der Zahnvorsprung 16 in die Innenbohrung der Bolzenhälfte 10 hinein ragt. Um eine ausreichende Verrastungswirkung zu erzielen, befinden sich im dargestellten Ausführungsbeispiel mehrere Zahnvorsprünge symmetrisch verteilt über den Umfang an den jeweiligen Außen- bzw. Innenseiten der Bolzenhälften 9 und 10.

Zum leichteren Einführen der Bolzenhälften 9 in die Innenbohrung der Bolzenhälfte 10 beim Verrastvorgang der beiden Teile miteinander besitzen die Zahnvorsprünge 15 an ihrem vorderen freien Ende Anfasungen 17.

Die Gesamtdarstellung der Figur 1 macht deutlich, dass das dargestellte Ausführungsbeispiel der erfindungsgemäßen Befestigungsvorrichtung speziell für den Einsatz als Pedal-Release-System konzipiert ist. Wie oben bereits erwähnt, ist ein derartiges System so ausgelegt, dass im Falle eines Unfalles durch geeignete Maßnahmen die Seitenwangen 3, 3A des Pedalblocks 2 derart verformt werden, dass sie seitlich in Richtung der Pfeile P in Figur 1 auswandern. Der seitliche Versatz ist so groß, dass der in den Lagerstellen 5 bzw. 5A aufgenommene Haltebolzen 8 vollständig freigegeben wird. Die Freigabe des Haltebolzens 8 bewirkt durch das Gewicht des Pedalkörpers 1 ein Herabfallen des Pedals, so dass ein Eindringen von letzterem in den Fußraum des betreffenden Kraftfahrzeuges verhindert wird.

Die Freigabe des Haltebolzens kann selbstverständlich auch dann erfolgen, wenn beispielsweise die Bolzenhälften 9 bzw. 10 an ihrem außerhalb der Lagerstelle 5, 5A liegenden freien Ende mit Absätzen versehen sind, die zum einen den Haltebolzen 8 in seiner Position halten und andererseits im Falle eines Unfalls der seitlichen Auswanderungsbewegung der Seitenwangen 3, 3A keinen entscheiden Widerstand entgegensetzen. Die in der Figur 1 dargestellte Anschlaggestaltung stellt somit nur eine mögliche Ausgestaltungsvariante der Erfindung dar.

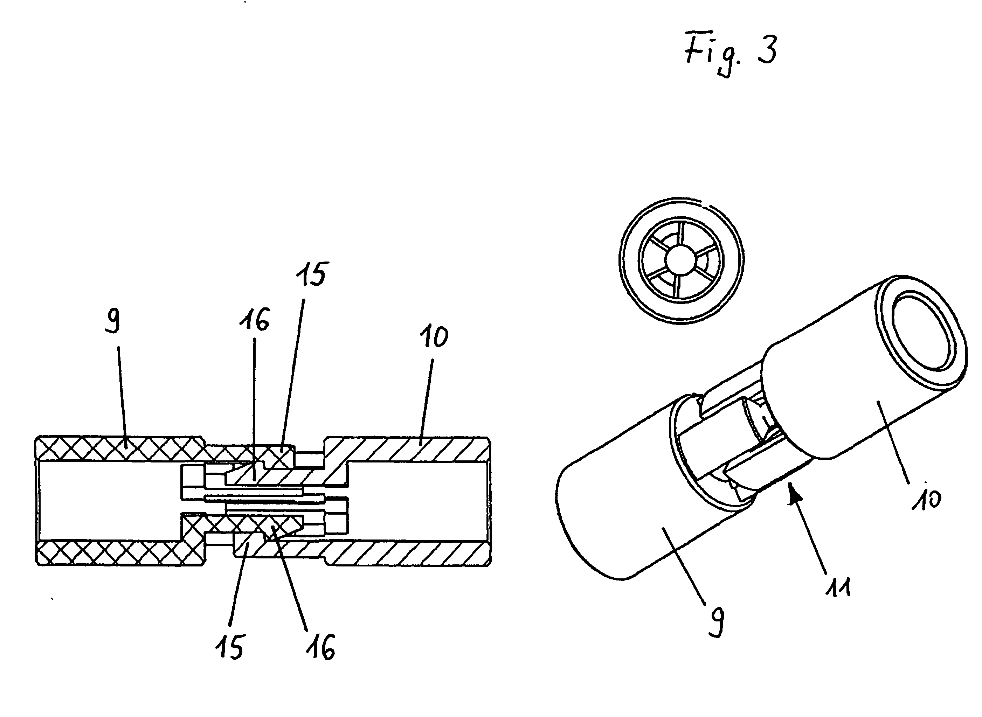

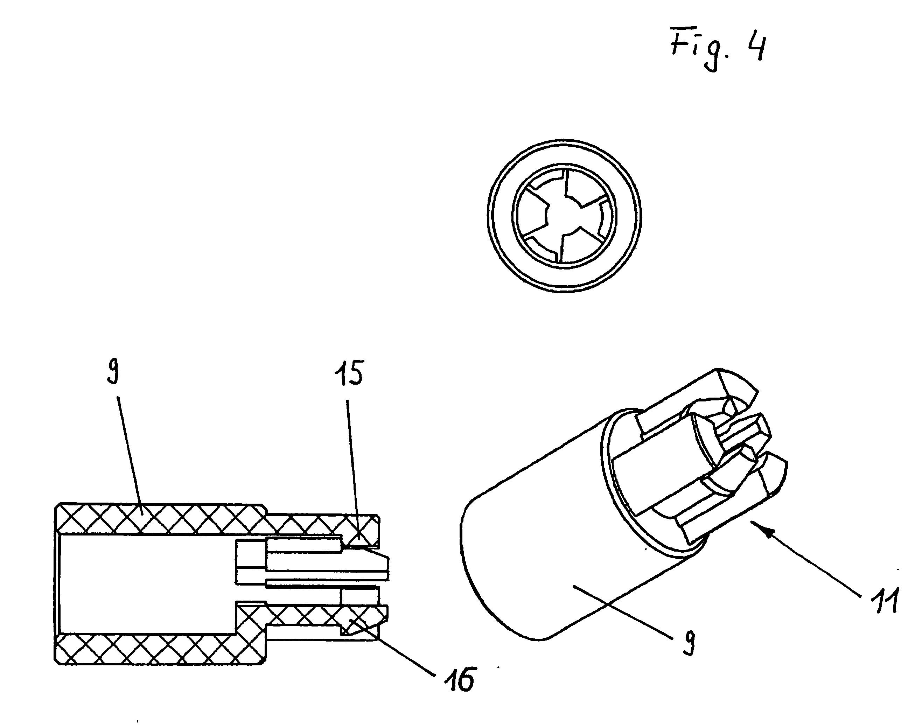

In weiteren Ausgestaltungsformen der Erfindung, wie sie beispielhaft in den Figuren 3 und 4 gezeigt werden, sind jeweils wechselseitig über den Umfang verteilt Zahnvorsprünge 16 an der Innenseite einer Bolzenhälfte 9 bzw. 10 und gleichzeitig Zahnvorsprünge 15 an der Außenseite derselben Bolzenhälfte 9 bzw. 10 angeordnet. Die dargestellten Bolzenhälften 9 und 10 sind als Gleichteile ausgeführt, so dass zu ihrer Herstellung nunmehr nur noch eine Spritzform bereitzustellen ist.

### Bezugszeichenliste

- 1: Pedalkörper
- 2: Pedalbock
- 3: Seitenwange
- 3A: Seitenwange
- 4: Bohrung
- 4A: Bohrung
- 5: Lagerstelle
- 5A: Lagerstelle
- 6: Gleitlagerbuchse
- 6A: Gleitlagerbuchse
- 7: Bohrung
- 8: Haltebolzen
- 9: Bolzenhälfte I
- 10: Bolzenhälfte II
- 11: Schnapphalterung
- 12: Längsachse
- 13: Anschlag
- 14: Ausnehmung
- 15: Zahnvorsprung
- 16: Zahnvorsprung
- 17: Anfasung

## Patentansprüche

1. Befestigungsvorrichtung mit Pedal für Kraftfahrzeuge, mit einem Haltebolzen (8), welcher an seinen freien Enden in je einer Lagerstelle (5, 5A) eines Pedalbocks (2) aufgenommen ist und zwischen diesen Lagerstellen (5, 5A) eine Lagerstelle für das Pedal aufweist, die in einer Bohrung (7) des Pedalkörpers (1) angeordnet ist,
**dadurch gekennzeichnet, dass**
der Haltebolzen (8) aus zwei Bolzenhälften (9, 10) besteht, die in zusammengesetztem Zustand durch eine elastische Schnapphalterung (11) miteinander verriegelt sind, wobei die Bolzenhälften (9, 10) in Bezug auf ihre Lage zum Pedal durch mindestens einen Anschlag (13) am Pedalkörper (1) festgelegt sind.

2. Befestigungsvorrichtung nach Anspruch 1,
**dadurch gekennzeichnet, dass**
die beiden als Gleichteile gefertigten Bolzenhälften (9, 10) Kunststoff - Hohlzylinder sind.

3. Befestigungsvorrichtung nach einem der vorstehend genannten Ansprüche,
**dadurch gekennzeichnet, dass**
die Schnapphalterung (11) aus mindestens zwei in Richtung der Axiallängsachse (12) der Bolzenhälften (9, 10) verrastenden Zahnvorsprüngen (15, 16) besteht, dergestalt, dass ein Zahnvorsprung (15) an der Innenseite der Hohlzylinderbohrung einer Bolzenhälfte (9) und der andere Zahnvorsprung (16) an der Außenwandung der korrespondierenden zweiten Bolzenhälfte (10) angeordnet ist.

4. Befestigungsvorrichtung nach Anspruch 2,
**dadurch gekennzeichnet, dass**
die Schnapphalterung (11) beider Bolzenhälften (9, 10) wechselweise über den Umfang verteilte Zahnvorsprünge (15) an der Innenseite der Zylinderbohrung einer Bolzenhälfte (9) und Zahnvorsprünge (16) an der Außenseite der selben Bolzenhälfte aufweisen.

5. Befestigungsvorrichtung nach Anspruch 3 oder 4,
**dadurch gekennzeichnet, dass**
mehrere Zahnvorsprünge (15, 16) regelmäßig beabstandet, am Umfang der Bolzenhälften (9, 10) angeordnet sind.

6. Befestigungsvorrichtung nach einem der vorstehend genannten Ansprüche,
**dadurch gekennzeichnet, dass**
der Anschlag (13) aus einem in der Bohrung (7) des Pedalkörpers (1) angeordneten Vorsprung und einer in der Außenseite des zusammengesetzten Haltebolzens (8) angeordneten, korrespondierende Ausnehmung (14) besteht.

7. Befestigungsvorrichtung nach Anspruch 6,
**dadurch gekennzeichnet, dass**
der Vorsprung eine in der Bohrung (7) umlaufende Gestalt aufweist und die Ausnehmung (14) eine in der Außenseite des Haltebolzens (8) angeordnete umlaufende Nut ist.

8. Befestigungsvorrichtung nach einem der Ansprüche 3 bis 7,
**dadurch gekennzeichnet, dass**
der an der Außenseite einer Bolzenhälfte (9) angeordnete Zahnvorsprung (15) an seinem vorderen freien Ende eine Anfasung (17) aufweist.

## Claims

1. Fastening device with pedal for motor vehicles, with a retaining bolt (8) which is held at its free ends in a respective bearing point (5, 5A) of a pedal block (2) and comprises between these bearing points (5, 5A) a bearing point for the pedal, this bearing point being disposed in a bore (7) of the pedal body (1),
**characterised in that**
the retaining bolt (8) consists of two bolt halves (9, 10) which are locked together in the assembled state by a resilient snap-action holder (11), wherein the bolt halves (9, 10) are secured as regards their position relative to the pedal by at least one stop (13) at the pedal body (1).

2. Fastening device according to Claim 1,
**characterised in that**
the two bolt halves (9, 10), which are produced as identical parts, are plastics hollow cylinders.

3. Fastening device according to either of the preceding Claims,
**characterised in that**
the snap-action holder (11) consists of at least two tooth projections (15, 16), which interlock in the direction of the axial longitudinal axis (12) of the bolt halves (9, 10), in such a way that one tooth projection (15) is disposed on the inside of the hollow cylindrical bore of one bolt half (9) and the other tooth projection (16) is disposed at the outer wall of the corresponding second bolt half (10).

4. Fastening device according to Claim 2,
**characterised in that**
the snap-action holder (11) of the two bolt halves (9, 10) comprises tooth projections (15) on the inside of the cylindrical bore of one bolt half (9) and tooth projections (16) on the outside of the same bolt half, these projections being alternately distributed over the circumference.

5. Fastening device according to Claim 3 or 4,
**characterised in that**
a plurality of tooth projections (15, 16) are disposed at the circumference of the bolt halves (9, 10) at regular spacings from one another.

6. Fastening device according to any one of the preceding Claims,
**characterised in that**
the stop (13) consists of a projection disposed in the bore (7) of the pedal body (1) and a corresponding recess (14) disposed in the outside of the assembled retaining bolt (8).

7. Fastening device according to Claim 6,
**characterised in that**
the projection extends all round in the bore and the recess (14) is a groove extending around the outside of the retaining bolt (8).

8. Fastening device according to any one of Claims 3 to 7,
**characterised in that**
the tooth projection (15) disposed on the outside of one bolt half (9) has a bevel (17) at its front free end.

## Revendications

1. Dispositif de fixation comportant une pédale pour véhicules automobiles, comportant un goujon de retenue (8), qui est logé, au niveau de ses extrémités libres, dans des paliers respectifs (5, 5A) d'un ensemble à pédale (2) et comporte, entre ses paliers (5, 5A), un palier pour la pédale, qui est disposé dans un perçage (7) du corps (1) de la pédale, **caractérisé en ce que**
le goujon de retenue (8) est constitué par deux moitiés de goujon (9, 10), qui à l'état réuni sont verrouillées entre elles par un dispositif de retenue élastique à encliquetage (11), les surfaces (9, 10) du goujon ayant une position fixée par rapport à la pédale à l'aide d'au moins une butée (13) située sur le corps (1) de la pédale.

2. Dispositif de fixation selon la revendication 1, **caractérisé en ce que** les deux moitiés de goujon (9, 10) réalisées sous la forme de pièces identiques sont des cylindres creux en matière plastique.

3. Dispositif de fixation selon l'une des revendications précédentes, **caractérisé en ce que** le dispositif de retenue à encliquetage (11) est constitué par au moins deux parties saillantes en forme de dents (15, 16), qui s'encliquètent dans la direction de l'axe axial longitudinal (12) des moitiés de goujon (9, 10) de telle sorte qu'une partie saillante en forme de dent (15) est disposée sur la face intérieure du perçage cylindrique creux d'une moitié de goujon (9) et que l'autre partie saillante en forme de dent (16) est disposée sur la paroi extérieure de la seconde moitié de goujon correspondante (10).

4. Dispositif de fixation selon la revendication 2, **caractérisé en ce que** le dispositif de retenue à encliquetage (11) des deux moitiés de goujon (9, 10) comporte des parties saillantes en forme de dents (15) situées sur la face intérieure du perçage cylindrique de la moitié de goujon (9) et des parties saillantes en forme de dents (16) situées sur la face extérieure de la même moitié de goujon, les parties saillantes en forme de dents étant réparties alternativement sur la périphérique.

5. Dispositif de fixation selon la revendication 3 ou 4, **caractérisé en ce que** plusieurs parties saillantes en forme de dents (15, 16) sont disposées sur la périphérie des moitiés de goujon (9, 10) en étant distantes de façon régulière.

6. Dispositif de fixation selon l'une des revendications précédentes, **caractérisé en ce que** la butée (13) est constituée par une partie saillante disposée dans le perçage (7) du corps (1) de la pédale et par un évidement correspondant (14) disposé sur la face extérieure du goujon de retenue assemblé (8).

7. Dispositif de fixation selon la revendication 6, **caractérisé en ce que** la partie saillante possède une forme périphérique dans le perçage (7) et que l'évidement (14) est une gorge périphérique formée dans la face extérieure du goujon de retenue (8).

8. Dispositif de fixation selon l'une des revendications 3 à 7, **caractérisé en ce que** la partie saillante en forme de dent (15) disposée sur la face extérieure d'une moitié de goujon (9) possède un biseau (17) sur son extrémité avant libre.
